(19) Europäisches Patentamt
European Patent Office
Office européen des brevets

(11) **EP 4 187 502 B1**

(12) **EUROPEAN PATENT SPECIFICATION**

(45) Date of publication and mention
of the grant of the patent:
**24.09.2025 Bulletin 2025/39**

(21) Application number: **22208766.0**

(22) Date of filing: **22.11.2022**

(51) International Patent Classification (IPC):
**G06V 20/54** *(2022.01)*  **B60L 53/37** *(2019.01)*
**B60L 53/80** *(2019.01)*  **G06V 20/52** *(2022.01)*
**G06V 10/82** *(2022.01)*

(52) Cooperative Patent Classification (CPC):
**B60L 53/37; B60L 53/80; G06V 10/82; G06V 20/52;
G06V 20/54;** Y02T 10/70; Y02T 10/7072

(54) **METHOD AND SYSTEM FOR DETECTING PARKING STATE OF VEHICLE IN BATTERY SWAP PLATFORM AND BATTERY SWAP PLATFORM**

VERFAHREN UND SYSTEM ZUR ERKENNUNG DES PARKSTATUS EINES FAHRZEUGS IN EINER BATTERIEWECHSELPLATTFORM UND BATTERIEWECHSELPLATTFORM

PROCÉDÉ ET SYSTÈME DE DÉTECTION D'ÉTAT DE STATIONNEMENT DE VÉHICULE DANS UNE PLATEFORME DE PERMUTATION DE BATTERIE ET PLATEFORME DE PERMUTATION DE BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.11.2021 CN 202111445414**

(43) Date of publication of application:
**31.05.2023 Bulletin 2023/22**

(73) Proprietor: **Nio Technology (Anhui) Co., Ltd
Hefei City, Anhui 230601 (CN)**

(72) Inventors:
• **WANG, Yifei
Hefei City, Anhui Province 230601 (CN)**
• **GUO, Jianfei
Hefei City, Anhui Province 230601 (CN)**
• **HUANG, Xiyuan
Hefei City, Anhui Province 230601 (CN)**
• **ZHOU, Jinlu
Hefei City, Anhui Province 230601 (CN)**
• **ZHAO, Haibin
Hefei City, Anhui Province 230601 (CN)**
• **ZOU, Jiyong
Hefei City, Anhui Province 230601 (CN)**

(74) Representative: **Vossius & Partner
Patentanwälte Rechtsanwälte mbB
Siebertstraße 3
81675 München (DE)**

(56) References cited:
**US-A1- 2016 107 619     US-A1- 2020 349 617
US-A1- 2020 353 832**

• **ULRICH LAWRENCE: "How Is This A Good
Idea?", 13 May 2021 (2021-05-13), XP093039176,
Retrieved from the Internet <URL:https://
spectrum.ieee.org/
ev-battery-swapping-how-is-this-a-good-idea>
[retrieved on 20230414]**

EP 4 187 502 B1

## Description

Technical Field

The disclosure relates to a method and system for detecting a parking state of a vehicle in a battery swap platform, and a battery swap platform including such a system.

Background Art

At present, there are two main modes of energy supply for an electric vehicle: vehicle charging and battery swap (i.e., battery replacement). The vehicle charging mode can be divided into alternating current slow charging and direct current fast charging, where time required for the alternating current slow charging is long and is limited by a parking lot. In addition, although the direct current fast charging has high power and short charging time, it has a large impact on a grid and also reduces service life of the battery. On the contrary, the battery swap mode can reduce damage to battery life while providing rapid energy supply for the electric vehicle. In addition, the battery swap mode can implement "peak shaving and energy storage" of the power load of the grid, and therefore improve the comprehensive utilization efficiency of power devices.

During battery swapping, a special device is generally required to remove the discharged battery from a vehicle chassis and then reinstall a new or fully charged battery. Such a battery swap platform is generally set to be automatic or semi-automatic, and before performing the battery swapping, the electric vehicle needs to be accurately parked in a preset position of the battery swap platform, which is particularly important especially in the case of automatic battery swapping. An automatic detection of a parking state of a vehicle in the battery swap platform can not only prevent a misoperation on the vehicle, but also reduce operating costs of the battery swapping. Relevant prior art includes: US 2020/353832 A1.

Summary of the Disclosure

An objective of the disclosure is to prevent a misoperation performed on a vehicle when the vehicle is battery swapped and therefore reduce battery swapping time.

**In** addition, the disclosure also aims to solve or alleviate other technical problems existing in the prior art.

**In** order to solve the above technical problems, a task proposed according to an aspect of the disclosure is to provide a method for detecting a parking state of a vehicle in a battery swap platform.

According to an aspect of the disclosure, there is provided a method for detecting a parking state of a vehicle in a battery swap platform, including the following steps:

a) using a panoramic camera apparatus to obtain an image of the battery swap platform, where the vehicle is parked on the battery swap platform;

b) inputting the image into a model, where the model is constructed based on a plurality of sets of training data including a sample image and labeling information, and the labeling information depicts whether the vehicle reaches a preset position of the battery swap platform in the sample image; and

c) processing the image based on the model to determine whether the vehicle is parked in the preset position of the battery swap platform.

According to the method for detecting a parking state of a vehicle in a battery swap platform proposed in the aspect of the disclosure, a calibration image is constructed to detect whether there is imaging deformation in the panoramic camera apparatus, and the calibration image is based on a source image of the battery swap platform that is obtained when the vehicle is not parked and a stroke image of a wheel fixing apparatus of the battery swap platform.

According to the method for detecting a parking state of a vehicle in a battery swap platform proposed in the aspect of the disclosure, the stroke image is converted into an RGB image and a grayscale image, and the calibration image is constructed based on the RGB image and a normalized grayscale image of the grayscale image, where a numerical value of the normalized grayscale image is 0 or 1.

According to the method for detecting a parking state of a vehicle in a battery swap platform proposed in the aspect of the disclosure, when the training data is constructed, ROI processing is performed on the image of the battery swap platform that is obtained by the panoramic camera apparatus, to obtain the sample image, where a height and/or a width of the sample image has a deviation in accordance with a normal distribution with respect to a preset value.

According to the method for detecting a parking state of a vehicle in a battery swap platform proposed in the aspect of the disclosure, whether a central area of a wheel reaches a preset position of a wheel fixing apparatus of the battery swap platform in the sample image is determined to obtain the labeling information assigned to the sample image.

According to the method for detecting a parking state of a vehicle in a battery swap platform proposed in the aspect of the disclosure, the wheel fixing apparatus is constructed as a V-shaped roller chute, and whether a projection of the central area of the wheel is located on a central axis of the V-shaped roller chute is determined, or whether the central area of the wheel is located between two vertical contact normals is determined, where the two vertical contact normals respectively pass through two end tangent points of the wheel and the V-shaped roller chute in the sample image, to obtain the labeling information assigned to the sample image.

According to the method for detecting a parking state of a vehicle in a battery swap platform proposed in the aspect of the disclosure, the model is constructed based on a convolutional neural network model, and the model has an input layer, a hidden layer including a feature filtering module and a Canoe module, and an output layer, where the model is based on a Fish activation function:

$$
\begin{cases}
\zeta(x) = \log(1 + e^x) \\
\phi(x) = \frac{x}{1+|x|} \\
Fish(x) = x \cdot \phi\big(\zeta(x)\big)
\end{cases}.
$$

According to the method for detecting a parking state of a vehicle in a battery swap platform proposed in the aspect of the disclosure, the Canoe module includes a Reshape layer, a convolutional layer, a Sigmoid layer, a flatten layer, and a fully connected layer, where a format of an image from the input layer is converted from NHWC to N1W (HC) based on the Reshape layer.

In addition, according to another aspect of the disclosure, there is provided a system for detecting a parking state of a vehicle, the system being enabled to be used in a battery swap platform, and including:

a panoramic camera apparatus enabled to be arranged at the battery swap platform and configured to obtain an image of the battery swap platform, where the battery swap platform is configured to park the vehicle;

a determining apparatus connected to the panoramic camera apparatus and configured to process the image from the panoramic camera apparatus based on a model and determine whether the vehicle is parked in a preset position of the battery swap platform, where the model is constructed based on a plurality of sets of training data including a sample image and labeling information, and the labeling information depicts whether the vehicle reaches a preset position of the battery swap platform in the sample image; and

a triggering apparatus arranged in the battery swap platform and connected to the determining apparatus and configured to trigger or stop a battery swapping process of the vehicle based on a determining result of the determining apparatus.

According to the system provided in the another aspect of the disclosure, the system has a calibration apparatus, and the calibration apparatus is configured to detect, based on a calibration image, whether there is imaging deformation in the panoramic camera apparatus.

According to the system provided in the another aspect of the disclosure, the calibration apparatus includes a calibration image generator configured to generate a calibration image based on a source image of the battery swap platform that is obtained when the vehicle is not parked and a stroke image of a wheel fixing apparatus of the battery swap platform. According to the system provided in the another aspect of the disclosure, the system has a preprocessing apparatus connected to the panoramic camera apparatus and configured to perform ROI processing on the image of the battery swap platform that is obtained by the panoramic camera apparatus and output the sample image, where a height and/or a width of the sample image has a deviation in accordance with a normal distribution with respect to a preset value.

According to the system provided in the another aspect of the disclosure, the system has a labeling information generator connected to the preprocessing apparatus and configured to determine whether a central area of a wheel reaches a preset position of a wheel fixing apparatus of the battery swap platform in the sample image and generate, based on the determining result, the labeling information assigned to the sample image.

According to the system provided in the another aspect of the disclosure, the wheel fixing apparatus is constructed as a V-shaped roller chute.

According to the system provided in the another aspect of the disclosure, the panoramic camera apparatus is configured as a fisheye camera.

According to the system provided in the another aspect of the disclosure, the fisheye camera is arranged such that the fisheye camera is aligned with a central area of a wheel when the vehicle is parked in the preset position of the battery swap platform.

Finally, according to another aspect of the disclosure, there is provided a battery swap platform including such a system.

The method and system for detecting a parking state of a vehicle in a battery swap platform and the battery swap platform according to the disclosure have the following benefits: The parking state of the vehicle in the battery swap platform can be automatically detected by applying the model based on deep learning, so that a misoperation on the vehicle and damage to the battery can be prevented.

## Brief Description of the Drawings

The disclosure is illustrated in more detail below with reference to the accompanying drawings, in which

FIG. 1 is a flowchart of a method for detecting a parking state of a vehicle in a battery swap platform according to the disclosure;

FIG. 2 shows a calibration image obtained when a panoramic camera apparatus is configured as a fisheye camera;

FIG. 3 shows a stroke image of a wheel fixing apparatus of a battery swap platform in a calibration image according to FIG. 2;

FIG. 4 is a simplified diagram of a relative position of a V-shaped roller chute and a wheel according to the disclosure;

FIGs. 5a to 5c show output images obtained when labeling information is constructed;

FIG. 6 is a schematic structural diagram of a convolutional neural network model according to the disclosure;

FIG. 7 is a line diagram of a Fish activation function of a model;

FIG. 8 is a schematic diagram of a system according to the disclosure; and

FIG. 9 is a schematic diagram of a battery swap platform in a state of accurate parking of a vehicle.

Detailed Description of Embodiments

It can be readily understood that according to the technical solution of the disclosure, those of ordinary skill in the art may propose a plurality of interchangeable structures and implementations. Therefore, the following specific embodiments and the accompanying drawings are merely exemplary descriptions of the technical solutions of the disclosure, and should not be construed as the entirety of the disclosure or construed as limiting the technical solution of the disclosure.

Directional terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well.

The battery swap platform mentioned herein should be understood as a battery swap platform or a battery swap apparatus for replacement operations of a traction battery of a vehicle, such as a stationary, movable or foldable battery swap platform or battery swap apparatus. The battery swap platform can also be understood as a building-type battery swap station separated from the outside world. In addition, the battery swap platform can further be relate to a so-called battery charging and swap platform or battery charging and swap station.

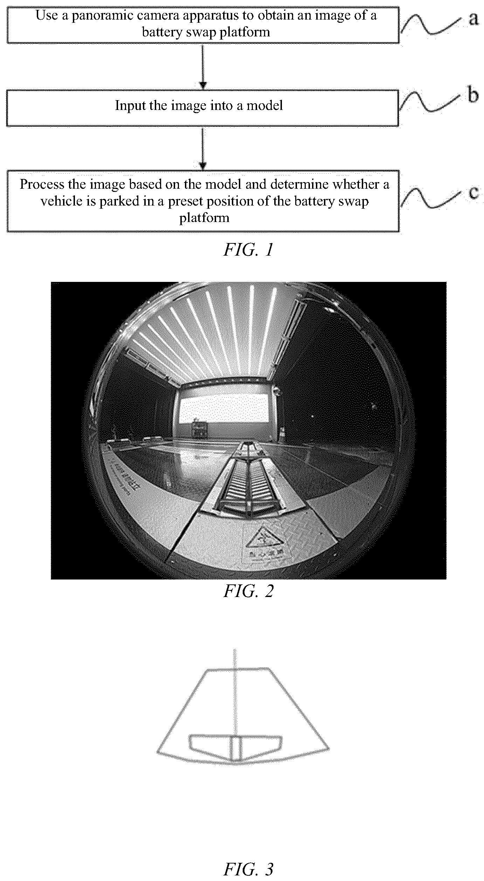

FIG. 1 is a block diagram of a method for detecting a parking state of a vehicle in a battery swap platform according to the disclosure. The method includes the following steps:

a) using a panoramic camera apparatus to obtain an image of the battery swap platform, where the vehicle is parked on the battery swap platform;
b) inputting the image into a model, where the model is constructed based on a plurality of sets of training data including a sample image and labeling information, and the labeling information depicts whether the vehicle reaches a preset position of the battery swap platform in the sample image; and
c) processing the image based on the model to determine whether the vehicle is parked in the preset position of the battery swap platform.

It should be noted that the step names mentioned above (and further be mentioned below) are merely used to distinguish between the steps and facilitate reference of the steps, and do not represent a sequence relationship between the steps, and the flowcharts including the drawings are merely examples of performing the method. Without significant conflict, the steps may be performed in various orders or simultaneously.

On the whole, the parking state of the vehicle on the battery swap platform can be visually determined directly based on a trained model, thereby avoiding a misoperation during an automatic or semi-automatic battery swapping process, for example, the battery swapping is started before the vehicle is parked or the battery swapping is started when the vehicle is not in a stopped state, and thus the time required for the battery swapping process can be reduced.

In step a), compared to a local image of the vehicle and the battery swap platform that is obtained by using a common method, the panoramic camera apparatus is used to obtain a panoramic image of the battery swap platform and the vehicle parked thereon, so that not only an overall grasp of a vehicle state (for example, a confirmation of the front and rear orientation of the vehicle) can be obtained, a relationship between the vehicle and the surroundings can also be obtained intuitively, which provides possibility of interaction with the battery swap platform, in particular with the main control system of the battery swap station. In addition, only one panoramic camera apparatus may be provided in step a), which makes it substantially unnecessary to change original hardware facilities of the battery swap platform. Herein, the panoramic camera apparatus can be configured as, but not limited to, a fisheye camera, and the panoramic camera apparatus further includes, for example, a camera apparatus in the form of a wide-angle lens or another camera apparatus that may obtain panoramic images.

Next, the model used in step b) is explained in more detail. Herein, a trained model can be understood as any one of models based on deep learning or machine learning, such as a neural network model, in particular a convolutional neural network model (CNN model for short) or a recurrent neural network model (RCNN model for short). Herein, the convolutional neural network model can be implemented, for example, in the form of VGGNet, GoogleNet, ResNet, DenseNet, LeNet, or the like.

It is known that before starting an actual detection process, the model to be used needs to be pretrained by using a plurality of sets of training data, that is, the model is trained by using a combination of a plurality of sample images and labeling information assigned thereto. Optionally, according to the method, before training image data is collected, the panoramic camera apparatus to be used is first calibrated to determine whether there is imaging deformation therein, which can improve the efficiency of training and learning and thus improve the efficiency of a subsequent detection process, and the imaging deformation is caused by, for example, a change in an installation position of a camera. The calibration process can also take place after model building or before starting the detection.

According to the method, the actual image of the battery swap platform that is obtained when the vehicle is not parked is compared with the established calibration image, so that whether there is imaging deformation in the panoramic camera apparatus can be inferred. The calibration image $I_j$ is constructed based on a source image $I_s$ of the battery swap platform that is obtained at a time point when the vehicle is not parked on the battery swap platform and the panoramic camera apparatus is in a correct mounting position and a stroke image I of a wheel fixing apparatus of the battery swap platform. The stroke image I of the wheel fixing apparatus is saved as a layer, in particular as a PNG image. For example, the stroke image $I$ can be divided into a three-channel RGB image $I_c$ and a one-channel (i.e., Alpha channel) grayscale image $I_m$. Correspondingly, the number of channels of the source image $I_s$ is, for example, 4. The source image is, for example, a PNG image. Only the RGB channels of the source image are used when the calibration image is constructed, and certainly, the number of channels of the source image can alternatively be set to 3, for example, the source image is in a format of JPG or BMP. Herein, the source image $I_s$, the RGB image $I_c$ and the grayscale image $I_m$ of the stroke image I have the same width and height. Therefore, the construction of the calibration image can include the following steps:

- performing normalization processing (i.e., normalization, referred to as a Norm function for short) on the grayscale image $I_m$ to convert the grayscale image into a grayscale image $\tilde{I}_m$ whose numerical value $i$ of Alpha channel is 0 or 1, where a numerical value range of the Alpha channel of the grayscale image $I_m$ is first changed from [0, 255] into [0, 1], and then a parameter $\delta$ is set, so as to finally change the numerical value of the Alpha channel to 0 or 1;
- constructing the calibration image $I_j$ based on the source image $I_s$, the normalized grayscale image $\tilde{I}_m$ of the stroke image, and the RGB image $I_c$.

Based on this, the construction of the calibration image can also be represented by the following formula:

$$\begin{cases} \tilde{I}_m = Norm(I_m) \\ \forall\, i \in \tilde{I}_m, i = \begin{cases} 0; & i \leq \delta \\ 1; & i > \delta \end{cases} \\ I_j = I_s * (1 - \tilde{I}_m) + I_c * \tilde{I}_m \end{cases}.$$

It should be noted that the construction of the calibration image is not limited to the method mentioned above, but can also be implemented in other manners, for example, it is also feasible that the calibration image is a predetermined calibration image. The calibration image is constructed, so that it is ensured that an impact caused by imaging deformation due to internal and external reasons during future use of the panoramic camera apparatus can be prevented, thereby preventing a determining error, and improving maintainability thereof.

For example, when the panoramic camera apparatus is configured as a fisheye camera, the calibration image constructed according to the above method can be shown in FIG. 2, where the stroke image, which will be explained in more detail below, of the wheel fixing apparatus of the battery swap platform is illustrated again in FIG. 3.

The construction of the training data includes construction of the sample image and generation of the labeling information, where the image collection for constructing the sample image includes: the image collection performed before model building (which can also be referred to as a primary image collection stage) and the image collection performed after the model building (which can also be referred to as an iterative image collection stage). In the primary image collection stage, image data entering a collection range is recorded, and a recorded video file is saved every other frame. However, in the iterative image collection stage, the recorded image is screened and arithmetic reasoning is performed by using the constructed model, and an image within a preset range is output. Herein, in the iterative data collection stage, the efficiency of screening image data by using the model is increasingly higher with the passage of time and the improvement of the model, and the generated image is increasingly targeted, so that performance of the model and prediction accuracy can be gradually improved.

Considering a size of a panoramic image and requirements for input parameters of the model, ROI (Region of Interest) processing is required for the collected image before the collected image is input into the model, for example, a region of interest in a specified format is cut from an image screened during a training process. Herein, the region of interest is located at the center of the image and its format is represented as HWC, for example, an image with a size of 256 $\times$ 512 $\times$ 3, where H represents the image height (in the unit of the number of pixels), W represents the image width (in the unit of the number of pixels), and C represents the number of channels. According to the method, in order to increase robustness of the training data and simulate a tolerance generated during actual batch installation, the obtained region of interest can have a certain deviation from a preset value (such as the width and height mentioned above) of a specified format, and randomness of the deviation is in accordance with a normal distribution. Specifically, the obtained region of interest has a random deviation in the width direction (which can also be referred to as the *x* axis of the image coordinate system) and the height direction (which can also be referred to as the y axis of the image coordinate system) with respect to the original size. For example, the obtained region of interest can have a random deviation of 2%, where the median value is $\mu = 0$, the variance in the *x* axis direction is $\sigma_x = 2.25$, and the variance in the *y* axis direction is $\sigma_y = 3.37$. The image obtained after being subjected to the ROI processing is used as the sample image for a subsequent labeling process and model training. In addition, the ROI processing process mentioned herein can alternatively be performed when the actual detection process is started, that is, before step b), the ROI processing is performed on the image obtained in step a).

Then, the collected sample image can be labeled by using a binary classifier; if a wheel reaches the preset position of the battery swap platform, labeling information "1" is given; otherwise labeling information "0" is given; and the labeling process can be completed by using a commonly used binary classifier.

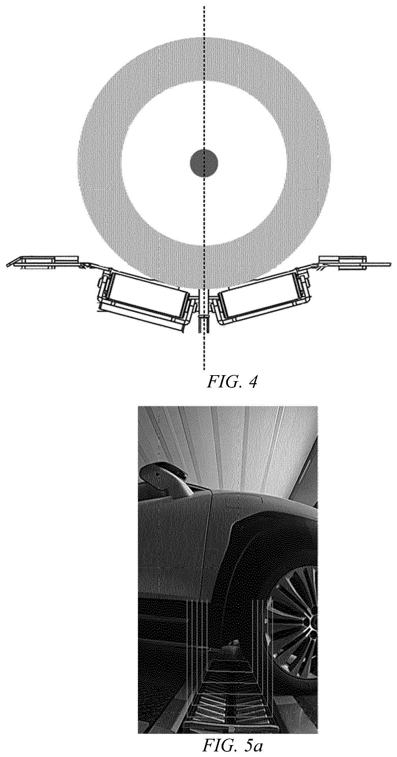

Optionally, according to the method, if the central area of the wheel reaches the preset position of the wheel fixing apparatus of the battery swap platform in the collected sample image, the labeling information "1" is given; otherwise the labeling information "0" is given. Optionally, the wheel fixing apparatus can be optionally constructed as a V-shaped roller chute, as shown in FIG. 4, and a cylindrical object can slide to the bottom of the V-shaped roller chute under the effect of gravity. Similarly, when the wheel precisely reaches the preset position, the central area of the wheel, in particular the center of the wheel hub, can be projected onto the central axis of the V-shaped roller chute, and in this case, the labeling information "1" is given, otherwise the labeling information "0" is given.

In addition, according to the method, an output image for the collected sample image is obtained by generating an image and a mask tensor through a drawing function in a manner similar to that used to construct the calibration image, to simplify an image labeling process. The output image includes a contact tangent of the wheel to the V-shaped roller chute and contact normals perpendicular to the V-shaped roller chute, in particular vertical contact normals in the image, where the contact tangent and the contact normals are determined by two end tangent points of the wheel and the V-shaped roller chute. More specifically, the end tangent points are intersection points of the wheel and the boundary lines of the V-shaped roller chute, and can be imaginary or actually existing end tangent points. As shown in FIG. 5a, when the wheel does not reach into contact with the V-shaped roller chute, the contact tangent and the vertical contact normals pass through two imaginary end tangent points, and in this case, the contact tangent is perpendicular to the central axis of the V-shaped roller chute. **In** this case, the labeling information "0" is given, and the image can be set not to be used for training of the model which will be subsequently explained.

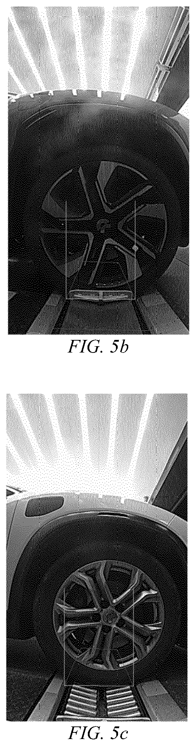

In contrast, as shown in FIGs. 5b and 5c, when the wheel reaches into contact with the V-shaped roller chute, that is, when there are two real end tangent points, the contact tangent passes through the two end tangent points, and the contact normals extend vertically upward from the end tangent points, respectively. Herein, if the central area of the wheel is located between the two contact normals, for example, in a central position between the two contact normals, the labeling information "1" is given, otherwise, the labeling information "0" is given.

In addition, when the vehicle does not fully reach into contact with the V-shaped roller chute, that is, when there is only one real end tangent point, the contact tangent passes through the end tangent point and is perpendicular to the central axis of the V-shaped roller chute, and the two contact normals separately pass through the real end tangent point and the imaginary end tangent point determined by the contact tangent. In this case, if the central area of the wheel is located between the two contact normals, the labeling information "1" is given, otherwise, the labeling information "0" is given.

The labeling information obtained by using the above method can be saved as a labeling file, for example, in the form of LBL, and form the plurality of sets of training data together with the corresponding sample image mentioned above, and the plurality of sets of training data can also be referred to as a training data set. It should be noted that pre-labeling of the sample image is not limited to the method mentioned above.

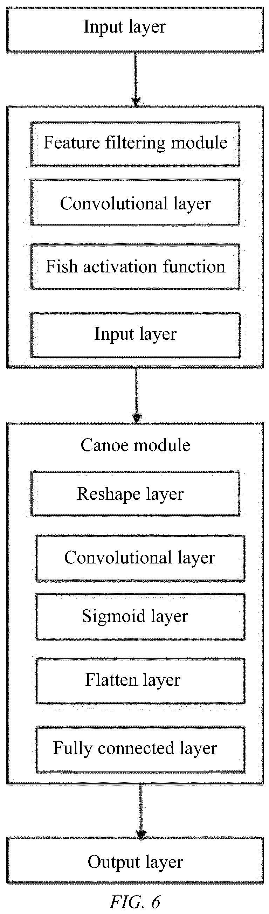

As mentioned above, the model used in the method can be constructed in the form of a convolutional neural network model having an input layer, a hidden layer, and an output layer, where the hidden layer includes a feature filtering module and a Canoe module, as shown in FIG. 6. The benefits of using the Canoe module are: an attention mechanism is implemented, and a calculation amount is reduced as much as possible, so that compatibility of the model with complex scenarios is improved; and the guidance of the positional relationship between the wheel center and the wheel fixing apparatus such as the chute is enhanced, thereby improving the determining pertinence and accuracy of the model. The feature filtering module includes a convolutional layer and a maximum pooling layer, for example, a $3 \times 3$ convolutional layer and a $2 \times 2$ maximum pooling layer, and a Fish activation function is applied in the feature filtering module:

$$\begin{cases} \zeta(x) = \log(1 + e^x) \\ \phi(x) = \frac{x}{1+|x|} \\ Fish(x) = x \cdot \phi(\zeta(x)) \end{cases},$$

where $x$ is a feature matrix of the image.

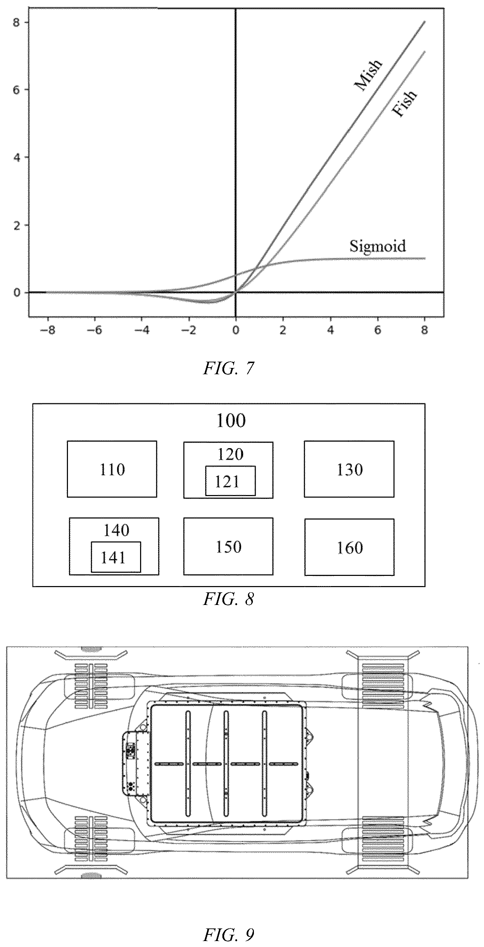

As shown in FIG. 7, the Fish activation function used herein has the following benefits:

- having function characteristics similar to those of the commonly used Mish activation function and the ability to provide a gradient around zero;
- reducing calculations compared with the Mish activation function, that is, reducing four exponential operations;
- providing a gradient of about 0.75 in positive-number data segment, the gradient of the Fish activation function used herein being more gentle compared to the Mish activation function providing a gradient of 1.0.

In addition, certainly, other types of activation functions can alternatively be employed under the condition of ensuring the required calculation speed and accuracy.

In addition, the feature filtering module can be implemented by a graphics processing unit (GPU), a general purpose processor (GPP), or the like. For example, in an implementation shown in FIG. 6, an input image with a size of $256 \times 512 \times 3$ can be converted into a $16 \times 32 \times 128$ image by four times feature filtering and input into the Canoe module subsequently used.

According to the method, the Canoe module includes the following:

- a Reshape layer where an input image is converted from a sorting format of NHWC into a form of N1W (HC), and in this way, the guidance of a positional relationship between a central area of a wheel and the wheel fixing apparatus (for example, a positional relationship between the central area of the wheel and the central axis of the V-shaped roller chute) can be enhanced, and the determining pertinence and accuracy of the model can be improved;
- a convolutional layer where a $1 \times 1$ convolution kernel is used to perform a model calculation for reducing calculation space of the model and perform a combined distillation on the original features, and the number of layers output of the convolutional layer is $\frac{CH}{4}$ ;
- a Sigmoid layer where image features are converted into an intensity signal of 0 to 1 and then further distilled using the method of element multiplication, the output format of the Sigmoid layer is $N1W\left(\frac{HC}{4}\right)$ , and the transformation function of the Sigmoid is:

$$y = \frac{1}{1 + e^{-x}};$$

- a flatten layer where the $N1W\left(\frac{HC}{4}\right)$ format is eventually converted into a $N\left(\frac{WHC}{4}\right)$ format;
- a fully connected layer where the calculation of the fully connected layer is performed, and finally a feature map of size such as N(256) is output into the output layer.

In the output layer, a determining result is output as a probability value by using Softmax function, and a Softmax Cross Entropy loss is used. In addition, "1" or "0" can also be directly output in the output layer to indicate whether the vehicle is correctly parked on the battery swap platform, or other manners are also feasible.

The disclosure further includes a system 100 for detecting a parking state of a vehicle in a battery swap platform, as shown in a block diagram in FIG. 8, where the system includes:

a panoramic camera apparatus 110 provided at the battery swap platform and configured to obtain an image of the battery swap platform, where the battery swap platform is configured to park a vehicle;
a determining apparatus 120 connected to the panoramic camera apparatus 110 in a signal transmitting manner and configured to determine whether the vehicle is parked in a preset position of the battery swap platform in the image from the panoramic camera apparatus 110 and output a determining result in the form of a signal; and
a triggering apparatus 130 arranged in or at the battery swap platform and connected to the determining apparatus 120 to directly or indirectly trigger or stop a battery swapping process of the vehicle based on the signal sent by the determining apparatus 120.

Based on the signal output by the determining apparatus 120, the triggering apparatus 130 can directly or indirectly control the battery swapping process. For example, in a fully automated battery swap platform, the triggering apparatus can automatically activate or deactivate the apparatus connected thereto for implementing the battery swapping process, thus avoiding misoperation performed on the vehicle when the vehicle is not accurately parked, to avoid damage to the battery. The triggering apparatus 130 can be configured as a switch for switching on or off an apparatus for implementing a battery swapping operation or as an alarm or another similar apparatus for giving a visual or audible alarm to a worker in a semi-automated battery swap platform.

In addition, the panoramic camera apparatus 110 can optionally be configured as a fisheye camera, as explained in the method according to the disclosure, the fisheye camera can be arranged beside the battery swap platform and can obtain an image of the battery swap platform, and a vehicle with a battery to be swapped is parked on the battery swap platform, which is explained in more detail below with reference to FIG. 9, where the battery swap platform includes a wheel fixing apparatus constructed as a V-shaped roller chute. As shown in FIG. 4, the V-shaped roller chute has two bearing plates which are at an angle to each other, in particular an obtuse angle, and the V-shaped roller chute includes rollers arranged in rows. In a state of accurate parking of the vehicle, a central area of a wheel, in particular the center of a wheel hub is projected onto a central axis of the V-shaped roller chute, and the central axis is perpendicular to the plane of the drawing in FIG 4.

According to disclosure, the fisheye camera 110 is arranged such that it can be aligned with the central area of the wheel and can display the wheel and/or the wheel fixing apparatus of the battery swap platform accurately and substantially without distortion in the center area of a picture that it takes. Further, the system can further include two or more panoramic camera apparatus, which can be arranged at two sides of the battery swap platform, for example, each wheel can be assigned a fisheye camera for improving the accuracy of the system. In the embodiment shown in FIG. 9, the system 100 includes two fisheye cameras respectively arranged on two sides of the wheel fixing apparatus, which are shown schematically by blocks for clarity.

Optionally, the system 100 further includes a calibration apparatus 140 configured to detect, based on a calibration image, whether there is imaging deformation in the panoramic camera apparatus 110, and the imaging deformation can be caused by a change in the position of the panoramic camera apparatus. Optionally, the calibration apparatus 140 further includes a calibration image generator 141 configured to generate a calibration image or have a calibration image stored thereon, and for the calibration image, reference is made to the explanations of the method according to the disclosure given above.

Optionally, the system 100 can further have a preprocessing apparatus 150 connected to the panoramic camera apparatus 110, and the preprocessing apparatus is configured to cut an image of a specified size from an image from the panoramic camera apparatus. For example, during construction of a sample image, ROI processing can be performed on the collected image and the sample image can be output. In addition, during detection, the collected image can be cut into an image of a specified size to be output to the determining apparatus 120. For this, reference is made to the explanations of the method according to the disclosure given above.

Optionally, the system 100 can further include a labeling information generator 160 connected to the preprocessing apparatus 150 and configured to determine whether a central area of a wheel reaches a preset position of a wheel fixing apparatus of the battery swap platform in the input sample image and generate corresponding labeling information based on the determining result, and input the labeling information into the determining apparatus 120.

Optionally, the labeling information generator 160 is configured to determine whether a projection of the central area of the wheel is on a central axis of the V-shaped roller chute, or configured to determine whether the central area of the wheel is located between two vertical contact normals, where the two vertical contact normals respectively pass through two end tangent points of the wheel and the V-shaped roller chute in the sample image, and the labeling information assigned to the sample image is generated based on the determining result. For this, reference is made to the explanations of the method according to the disclosure given above.

Optionally, the determining apparatus 120 includes a processor 121 on which a model is stored, where the model is constructed based on a convolutional neural network model, and the model has an input layer, a hidden layer including a feature filtering module and a Canoe module, and an output layer. For this, reference is made to the explanations of the method according to the disclosure given above.

Finally, the disclosure further relates to a battery swap platform including such a system that can be connected to or integrated into a main control system of the battery swap platform.

In general, the disclosure has the following advantages over the previous/prior art:

    1. A low-cost camera may be selected as a data collection source for a panoramic camera apparatus.
    2. Installation is simple, and after the installation, algorithm empowerment can be obtained by deploying an algorithm model.
    3. A deep convolutional neural network may be used to construct a model to implement a computer vision determination, without positioning an observation element, and a direct input into an overall determination algorithm logic is implemented, so that accurate positioning information of a vehicle may be obtained.
    4. There is no strong dependence on involved hardware facilities, and as long as algorithm development and data collection standards described subsequently are met, training, development, and implementation of a model may be implemented.
    5. The model may be upgraded according to actual operational conditions to obtain higher quality.
    6. Installation is flexible, and in an actual scenario, a determination may be completed by performing installation only at one position. For a scenario where higher accuracy is required, a plurality of sensor groups may be installed at a time and assigned algorithms, and a more reliable determination output may be obtained by means of a voting mode.

7. High accuracy, high reliability, and compatibility with a plurality of data forms, including but not limited to (a color image, an infrared image, a scanning image, a point cloud image, etc.) may be implemented.

8. Less changes are made to the hardware structure, and the operability is great, which is suitable for batch application in a large-scale scenario.

**Claims**

1. A method for detecting a parking state of a vehicle in a battery swap platform, comprising the following steps:

   a) using a panoramic camera apparatus to obtain an image of the battery swap platform, wherein the vehicle is parked on the battery swap platform;
   b) inputting the image into a model, wherein the model is constructed based on a plurality of sets of training data comprising a sample image and labeling information, and the labeling information depicts whether the vehicle reaches a preset position of the battery swap platform in the sample image; and
   c) processing the image based on the model to determine whether the vehicle is parked in the preset position of the battery swap platform.

2. The method according to claim 1, wherein a calibration image is constructed to detect whether there is imaging deformation in the panoramic camera apparatus, and the calibration image is based on a source image of the battery swap platform that is obtained when the vehicle is not parked and a stroke image of a wheel fixing apparatus of the battery swap platform.

3. The method according to claim 2, wherein the stroke image is converted into an RGB image and a grayscale image, and the calibration image is constructed based on the RGB image and a normalized grayscale image of the grayscale image, wherein a numerical value of the normalized grayscale image is 0 or 1.

4. The method according to claim 1, 2, or 3, wherein when the training data is constructed, ROI processing is performed on the image of the battery swap platform that is obtained by the panoramic camera apparatus, to obtain the sample image, wherein a height and/or a width of the sample image has a deviation in accordance with a normal distribution with respect to a preset value.

5. The method according to any one of claims 1 to 4, wherein whether a central area of a wheel reaches a preset position of a wheel fixing apparatus of the battery swap platform in the sample image is determined to obtain the labeling information assigned to the sample image.

6. The method according to any one of claims 1 to 5, wherein the wheel fixing apparatus is constructed as a V-shaped roller chute, and whether a projection of the central area of the wheel is located on a central axis of the V-shaped roller chute is determined, or whether the central area of the wheel is located between two vertical contact normals is determined, wherein the two vertical contact normals respectively pass through two end tangent points of the wheel and the V-shaped roller chute in the sample image, to obtain the labeling information assigned to the sample image.

7. The method according to any one of claims 1 to 6, wherein the model is constructed based on a convolutional neural network model, and the model has an input layer, a hidden layer comprising a feature filtering module and a Canoe module, and an output layer, wherein the model is based on a Fish activation function:

$$\begin{cases} \zeta(x) = \log(1 + e^x) \\ \phi(x) = \dfrac{x}{1+|x|} \\ Fish(x) = x \cdot \phi\big(\zeta(x)\big) \end{cases}.$$

8. The method according to claim 7, wherein the Canoe module comprises a Reshape layer, a convolutional layer, a Sigmoid layer, a flatten layer, and a fully connected layer, wherein a format of an image from the input layer is converted from NHWC to N1W (HC) based on the Reshape layer.

9. A system for detecting a parking state of a vehicle, the system preferably being adapted to perform the method of any one of claims 1 to 8, the system being enabled to be used in a battery swap platform, and comprising:

   a panoramic camera apparatus enabled to be arranged at the battery swap platform and configured to obtain an image of the battery swap platform, wherein the battery swap platform is configured to park the vehicle;
   a determining apparatus connected to the panoramic camera apparatus and configured to process the image from the panoramic camera apparatus based on a model and determine whether the vehicle is parked in a preset position of the battery swap platform, wherein the model is constructed based on a plurality of sets of training data comprising a sample image and labeling information, and the labeling information depicts whether the vehicle reaches a preset position of the battery swap platform in the sample image; and
a triggering apparatus arranged in the battery swap platform and connected to the determining apparatus and configured to trigger or stop a battery swapping process of the vehicle based on a determining result of the determining apparatus.

10. The system according to claim 9, wherein the system has a calibration apparatus, and the calibration apparatus is configured to detect, based on a calibration image, whether there is imaging deformation in the panoramic camera apparatus.

11. The system according to claim 10, wherein the calibration apparatus comprises a calibration image generator configured to generate a calibration image based on a source image of the battery swap platform that is obtained when the vehicle is not parked and a stroke image of a wheel fixing apparatus of the battery swap platform.

12. The system according to any one of claims 9 to 11, wherein the system has a preprocessing apparatus connected to the panoramic camera apparatus and configured to perform ROI processing on the image of the battery swap platform that is obtained by the panoramic camera apparatus and output the sample image, wherein a height and/or a width of the sample image has a deviation in accordance with a normal distribution with respect to a preset value.

13. The system according to claim 12, wherein the system has a labeling information generator connected to the preprocessing apparatus and configured to determine whether a central area of a wheel reaches a preset position of a wheel fixing apparatus of the battery swap platform in the sample image and generate, based on the determining result, the labeling information assigned to the sample image.

14. The system according to claim 11, 12. Or 13, wherein the wheel fixing apparatus is constructed as a V-shaped roller chute.

15. The system according to any one of claims 9 to 14, wherein the panoramic camera apparatus is configured as a fisheye camera.

16. The system according to claim 15, wherein the fisheye camera is arranged such that the fisheye camera is aligned with a central area of a wheel when the vehicle is parked in the preset position of the battery swap platform.

17. A battery swap platform, comprising the system according to any one of claims 9 to 16.

**Patentansprüche**

1. Verfahren zum Erkennen eines Parkzustands eines Fahrzeugs in einer Batteriewechselplattform, das die folgenden Schritte umfasst:

   a)Verwenden einer Panoramakameraeinrichtung, um ein Bild der Batteriewechselplattform zu erhalten, wobei das Fahrzeug auf der Batteriewechselplattform geparkt ist;
   b)Eingeben des Bildes in ein Modell, wobei das Modell basierend auf einer Vielzahl von Sätzen von Trainingsdaten konstruiert wird, die ein Beispielbild und Kennzeichnungsinformationen umfassen, und die Kennzeichnungsinformationen darstellen, ob das Fahrzeug eine voreingestellte Position der Batteriewechselplattform im Beispielbild erreicht; und
   c)Verarbeiten des Bildes basierend auf dem Modell, um zu bestimmen, ob das Fahrzeug in der voreingestellten Position der Batteriewechselplattform geparkt ist.

2. Verfahren gemäß Anspruch 1, wobei ein Kalibrierungsbild konstruiert wird, um zu erkennen, ob es eine Abbildungsdeformation in der Panoramakameraeinrichtung gibt, und das Kalibrierungsbild auf einem Quellbild der Batteriewechselplattform, das erhalten wird, wenn das Fahrzeug nicht geparkt ist, und einem Strichbild einer Radbefestigungseinrichtung der Batteriewechselplattform basiert.

3. Verfahren gemäß Anspruch 2, wobei das Strichbild in ein RGB-Bild und ein Graustufenbild umgewandelt wird und das Kalibrierungsbild basierend auf dem RGB-Bild und einem normalisierten Graustufenbild des Graustufenbildes konstruiert wird, wobei ein numerischer Wert des normalisierten Graustufenbildes 0 oder 1 ist.

4. Verfahren gemäß Anspruch 1, 2 oder 3, wobei, wenn die Trainingsdaten konstruiert werden, eine ROI-Verarbeitung an dem Bild der Batteriewechselplattform durchgeführt wird, das durch die Panoramakameraeinrichtung erhalten wird, um das Beispielbild zu erhalten, wobei eine Höhe und/oder eine Breite des Beispielbildes eine Abweichung gemäß einer Normalverteilung in Bezug auf einen voreingestellten Wert aufweist.

**5.** Verfahren gemäß einem der Ansprüche 1 bis 4, wobei bestimmt wird, ob ein mittlerer Bereich eines Rades eine voreingestellte Position einer Radbefestigungseinrichtung der Batteriewechselplattform im Beispielbild erreicht, um die dem Beispielbild zugeordneten Kennzeichnungsinformationen zu erhalten.

**6.** Verfahren gemäß einem der Ansprüche 1 bis 5, wobei die Radbefestigungseinrichtung als V-förmige Rollenrutsche ausgebildet ist und bestimmt wird, ob eine Projektion des mittleren Bereichs des Rades auf einer Mittelachse der V-förmigen Rollenrutsche liegt oder ob der mittlere Bereich des Rades zwischen zwei vertikalen Kontaktnormalen liegt, wobei die beiden vertikalen Kontaktnormalen jeweils durch zwei Endtangentenpunkte des Rades und der V-förmigen Rollenrutsche im Beispielbild verlaufen, um die dem Beispielbild zugeordneten Kennzeichnungsinformationen zu erhalten.

**7.** Verfahren gemäß einem der Ansprüche 1 bis 6, wobei das Modell basierend auf einem neuronalen Faltungsnetzmodell konstruiert wird und das Modell eine Eingabeschicht, eine verborgene Schicht, die ein Merkmalfiltermodul und ein Canoe-Modul umfasst, und eine Ausgabeschicht aufweist, wobei das Modell auf einer Fisch-Aktivierungsfunktion basiert:

$$\begin{cases} \zeta(x) = \log(1 + e^x) \\ \phi(x) = \frac{x}{1+|x|} \\ Fisch(x) = x \cdot \phi(\zeta(x)) \end{cases}.$$

**8.** Verfahren gemäß Anspruch 7, wobei das Canoe-Modul eine Reshape ("Umformungs")-Schicht, eine Faltungsschicht, eine Sigmoid-Schicht, eine Flatten ("Abflachungs")-Schicht und eine vollständig verbundene Schicht umfasst, wobei ein Format eines Bildes aus der Eingabeschicht basierend auf der Reshape-Schicht von NHWC in N1W (HC) umgewandelt wird.

**9.** System zum Erkennen eines Parkzustands eines Fahrzeugs, wobei das System vorzugsweise dafür ausgelegt ist, das Verfahren nach einem der Ansprüche 1 bis 8 durchzuführen, wobei das System in einer Batteriewechselplattform verwendet werden kann und umfasst:

eine Panoramakameraeinrichtung, die an der Batteriewechselplattform angeordnet werden kann und dafür ausgelegt ist, ein Bild der Batteriewechselplattform zu erhalten, wobei die Batteriewechselplattform zum Parken des Fahrzeugs ausgelegt ist;
eine Bestimmungseinrichtung, die mit der Panoramakameravorrichtung verbunden und dafür ausgelegt ist, das Bild von der Panoramakameravorrichtung basierend auf einem Modell zu verarbeiten und zu bestimmen, ob das Fahrzeug in einer voreingestellten Position der Batteriewechselplattform geparkt ist, wobei das Modell basierend auf einer Vielzahl von Sätzen von Trainingsdaten konstruiert wird, die ein Beispielbild und Kennzeichnungsinformationen umfassen, und die Kennzeichnungsinformationen darstellen, ob das Fahrzeug eine voreingestellte Position der Batteriewechselplattform im Beispielbild erreicht; und
eine Auslöseeinrichtung, die in der Batteriewechselplattform angeordnet und mit der Bestimmungseinrichtung verbunden ist und dafür ausgelegt ist, einen Batteriewechselprozess des Fahrzeugs basierend auf einem Bestimmungsergebnis der Bestimmungseinrichtung auszulösen oder zu stoppen.

**10.** System gemäß Anspruch 9, wobei das System eine Kalibrierungseinrichtung aufweist und die Kalibrierungseinrichtung dafür ausgelegt ist, basierend auf einem Kalibrierungsbild zu erkennen, ob eine Abbildungsdeformation in der Panoramakameraeinrichtung vorliegt.

**11.** System gemäß Anspruch 10, wobei die Kalibrierungseinrichtung einen Kalibrierungsbildgenerator umfasst, der dafür ausgelegt ist, ein Kalibrierungsbild zu erzeugen, basierend auf einem Quellbild der Batteriewechselplattform, das erhalten wird, wenn das Fahrzeug nicht geparkt ist, und einem Strichbild einer Radbefestigungseinrichtung der Batteriewechselplattform.

**12.** System gemäß einem der Ansprüche 9 bis 11, wobei das System eine Vorverarbeitungseinrichtung aufweist, die mit der Panoramakameraeinrichtung verbunden und dafür ausgelegt ist, eine ROI-Verarbeitung an dem Bild der Batteriewechselplattform, das durch die Panoramakameraeinrichtung erhalten wird, durchzuführen und das Beispielbild auszugeben, wobei eine Höhe und/oder eine Breite des Beispielbildes eine Abweichung gemäß einer Normalverteilung in Bezug auf einen voreingestellten Wert aufweist.

**13.** System gemäß Anspruch 12, wobei das System einen Kennzeichnungsinformationsgenerator aufweist, der mit der Vorverarbeitungsvorrichtung verbunden und dafür ausgelegt ist zu bestimmen, ob ein mittlerer Bereich eines Rades eine voreingestellte Position einer Radbefestigungseinrichtung der Batteriewechselplattform im Beispielbild erreicht, und basierend auf dem Bestimmungsergebnis die dem Beispielbild zugeordneten Kennzeichnungsinformationen zu erzeugen.

**14.** System gemäß Anspruch 11, 12 oder 13, wobei die Radbefestigungseinrichtung als V-förmige Rollenrutsche konstruiert ist.

**15.** System gemäß einem der Ansprüche 9 bis 14, wobei die Panoramakameraeinrichtung als Fischaugenkamera ausgelegt ist.

**16.** System gemäß Anspruch 15, wobei die Fischaugenkamera so angeordnet ist, dass die Fischaugenkamera auf einen mittleren Bereich eines Rades ausgerichtet ist, wenn das Fahrzeug in der voreingestellten Position der Batteriewechselplattform geparkt ist.

**17.** Batteriewechselplattform, die das System gemäß einem der Ansprüche 9 bis 16 umfasst.

**Revendications**

**1.** Procédé pour détecter un état de stationnement d'un véhicule dans une plate-forme d'échange de batterie, comprenant les étapes suivantes :

a) l'utilisation d'un appareil à caméra panoramique pour obtenir une image de la plate-forme d'échange de batterie, dans lequel le véhicule est en stationnement sur la plate-forme d'échange de batterie ;

b) l'entrée de l'image dans un modèle, dans lequel le modèle est construit sur la base d'une pluralité d'ensembles de données d'entraînement comprenant une image d'échantillon et des informations d'étiquetage, et les informations d'étiquetage illustrent le fait que le véhicule atteint, ou n'atteint pas, une position prédéfinie de la plate-forme d'échange de batterie dans l'image d'échantillon ; et

c) le traitement de l'image sur la base du modèle pour déterminer le fait que le véhicule est, ou n'est pas, en stationnement dans la position prédéfinie de la plate-forme d'échange de batterie.

**2.** Procédé selon la revendication 1, dans lequel une image de calibrage est construite pour détecter le fait qu'il y a, ou n'y a pas, de déformation d'imagerie dans l'appareil à caméra panoramique, et l'image de calibrage est basée sur une image source de la plate-forme d'échange de batterie qui est obtenue lorsque le véhicule n'est pas en stationnement et une image de course d'un appareil de fixation de roue de la plate-forme d'échange de batterie.

**3.** Procédé selon la revendication 2, dans lequel l'image de course est convertie en une image RVB et une image en niveaux de gris, et l'image de calibrage est construite sur la base de l'image RVB et d'une image en niveaux de gris normalisée de l'image en niveaux de gris, dans lequel une valeur numérique de l'image en niveaux de gris normalisée est de 0 ou de 1.

**4.** Procédé selon la revendication 1, 2, ou 3, dans lequel, lorsque les données d'entraînement sont construites, un traitement ROI est réalisé sur l'image de la plate-forme d'échange de batterie qui est obtenue par l'appareil à caméra panoramique, pour obtenir l'image d'échantillon, dans lequel une hauteur et/ou une largeur de l'image d'échantillon a un écart conformément à une distribution normale par rapport à une valeur prédéfinie.

**5.** Procédé selon l'une quelconque des revendications précédentes 1 à 4, dans lequel le fait qu'une zone centrale d'une roue atteint, ou n'atteint pas, une position prédéfinie d'un appareil de fixation de roue de la plate-forme d'échange de batterie dans l'image d'échantillon est déterminé pour obtenir les informations d'étiquetage attribuées à l'image d'échantillon.

**6.** Procédé selon l'une quelconque des revendications précédentes 1 à 5, dans lequel l'appareil de fixation de roue est construit sous forme de descendeur à rouleaux en forme de V, et le fait qu'une projection de la zone centrale de la roue est, ou n'est pas, située sur un axe central du descendeur à rouleaux en forme de V est déterminé, ou le fait que la zone centrale de la roue est, ou n'est pas, située entre deux normales de contact verticales est déterminé, dans lequel les deux normales de contact verticales passent respectivement à travers deux points tangents d'extrémité de la roue et du descendeur à rouleaux en forme de V dans l'image d'échantillon, pour obtenir les informations d'étiquetage attribuées à l'image d'échantillon.

**7.** Procédé selon l'une quelconque des revendications précédentes 1 à 6, dans lequel le modèle est construit sur la base d'un modèle de réseau neuronal convolutif, et le modèle a une couche d'entrée, une couche cachée comprenant un module de filtrage de caractéristique, et un module Canoe, et une couche de sortie, dans lequel le modèle est basé sur une fonction d'activation Fish :

$$\begin{cases} \xi(x) = \log(1 + e^x) \\ \phi(x) = \dfrac{x}{1 + |x|} \\ Fish(x) = x \cdot \phi\big(\xi(x)\big) \end{cases}$$

**8.** Procédé selon la revendication 7, dans lequel le module Canoe comprend une couche Reshape, une couche convolutive, une couche Sigmoïde, une couche Flatten, et une couche entièrement connectée, dans lequel un format d'une image provenant de la couche d'entrée est converti de NHWC en N1W (HC) sur la base de la couche Reshape.

9. Système pour détecter un état de stationnement d'un véhicule, le système étant de préférence adapté pour réaliser le procédé de l'une quelconque des revendications précédentes 1 à 8, le système pouvant être utilisé dans une plate-forme d'échange de batterie, et comprenant :

un appareil à caméra panoramique pouvant être agencé au niveau de la plate-forme d'échange de batterie et configuré pour obtenir une image de la plate-forme d'échange de batterie, dans lequel la plate-forme d'échange de batterie est configurée pour mettre en stationnement le véhicule ;
un appareil de détermination connecté à l'appareil à caméra panoramique et configuré pour traiter l'image provenant de l'appareil à caméra panoramique sur la base d'un modèle et déterminer le fait que le véhicule est, ou n'est pas, en stationnement dans une position prédéfinie de la plate-forme d'échange de batterie, dans lequel le modèle est construit sur la base d'une pluralité d'ensembles de données d'entraînement comprenant une image d'échantillon et des informations d'étiquetage, et les informations d'étiquetage illustrent le fait que le véhicule atteint, ou n'atteint pas, une position prédéfinie de la plate-forme d'échange de batterie dans l'image d'échantillon ; et
un appareil de déclenchement agencé dans la plate-forme d'échange de batterie et connecté à l'appareil de détermination et configuré pour déclencher ou arrêter un processus d'échange de batterie du véhicule sur la base d'un résultat de détermination de l'appareil de détermination.

10. Système selon la revendication 9, dans lequel le système a un appareil de calibrage, et l'appareil de calibrage est configuré pour détecter, sur la base d'une image de calibrage, le fait qu'il y a, ou n'y a pas, de déformation d'imagerie dans l'appareil à caméra panoramique.

11. Système selon la revendication 10, dans lequel l'appareil de calibrage comprend un générateur d'image de calibrage configuré pour générer une image de calibrage sur la base d'une image source de la plate-forme d'échange de batterie qui est obtenue lorsque le véhicule n'est pas en stationnement et d'une image de course d'un appareil de fixation de roue de la plate-forme d'échange de batterie.

12. Système selon l'une quelconque des revendications précédentes 9 à 11, dans lequel le système a un appareil de prétraitement connecté à l'appareil à caméra panoramique et configuré pour réaliser un traitement ROI sur l'image de la plate-forme d'échange de batterie qui est obtenue par l'appareil à caméra panoramique et sortir l'image d'échantillon, dans lequel une hauteur et/ou une largeur de l'image d'échantillon a un écart conformément à une distribution normale par rapport à une valeur prédéfinie.

13. Système selon la revendication 12, dans lequel le système a un générateur d'informations d'étiquetage connecté à l'appareil de prétraitement et configuré pour déterminer le fait qu'une zone centrale d'une roue atteint, ou n'atteint pas, une position prédéfinie d'un appareil de fixation de roue de la plate-forme d'échange de batterie dans l'image d'échantillon et générer, sur la base du résultat de détermination, les informations d'étiquetage attribuées à l'image d'échantillon.

14. Système selon la revendication 11, 12, ou 13, dans lequel l'appareil de fixation de roue est construit sous forme de descendeur à rouleaux en forme de V.

15. Système selon l'une quelconque des revendications précédentes 9 à 14, dans lequel l'appareil à caméra panoramique est configuré sous forme à caméra très grand angle.

16. Système selon la revendication 15, dans lequel la caméra très grand angle est agencée de manière telle que la caméra très grand angle est alignée avec une zone centrale d'une roue lorsque le véhicule est en stationnement dans la position prédéfinie de la plate-forme d'échange de batterie.

17. Plate-forme d'échange de batterie, comprenant le système selon l'une quelconque des revendications précédentes 9 à 16.

| Use a panoramic camera apparatus to obtain an image of a battery swap platform | a |
|---|---|

↓

| Input the image into a model | b |
|---|---|

↓

| Process the image based on the model and determine whether a vehicle is parked in a preset position of the battery swap platform | c |
|---|---|

FIG. 1

FIG. 2

FIG. 3

FIG. 4

FIG. 5a

FIG. 5b

FIG. 5c

Input layer

Feature filtering module

Convolutional layer

Fish activation function

Input layer

Canoe module

Reshape layer

Convolutional layer

Sigmoid layer

Flatten layer

Fully connected layer

Output layer

*FIG. 6*

*FIG. 7*

*FIG. 8*

*FIG. 9*

**EP 4 187 502 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020353832 A1